# EUROPÄISCHE PATENTSCHRIFT

(11) **EP 1 055 061 B1**
(45) Veröffentlichungstag und Bekanntmachung des Hinweises auf die Patenterteilung: **08.10.2003**
(21) Anmeldenummer: 99973422.1
(22) Anmeldetag: 03.11.1999
(51) Int. Cl.: F02M 45/02, F02D 41/40

(54) **VERFAHREN ZUR GEMISCHBILDUNG IN EINEM BRENNRAUM EINES VERBRENNUNGSMOTORS**
METHOD OF PRODUCING A MIXTURE IN THE COMBUSTION CHAMBER OF AN INTERNAL COMBUSTION ENGINE
PROCEDE POUR PREPARER UN MELANGE DANS LA CHAMBRE DE COMBUSTION D'UN MOTEUR A COMBUSTION INTERNE

(30) Priorität: 15.12.1998 DE 19857785
(43) Veröffentlichungstag der Anmeldung: 29.11.2000
(73) Patentinhaber: DaimlerChrysler AG, 70567 Stuttgart (DE)
(72) Erfinder: ERNST, Johannes, D-76534 Baden-Baden (DE); FROEHLICH, Jens, D-79539 Lörrach (DE); MOWLL, Deborah, D-73730 Esslingen (DE); RÖSSLER, Klaus, D-73776 Altbach (DE); VENT, Guido, D-71570 Oppenweiler (DE)
(86) Internationale Anmeldenummer: EP9908392
(87) Internationale Veröffentlichungsnummer: WO00036292

(56) Entgegenhaltungen:
- EP-A- 0 621 400
- EP-A- 0 661 432
- EP-A- 0 786 592
- US-A- 5 713 328
- US-A- 5 740 776

## Beschreibung

Die Erfindung bezieht sich auf Verfahren zur Gemischbildung in einem Brennraum eines Verbrennungsmotors, bei dem während eines Arbeitstaktes des Verbrennungsmotors Kraftstoff mit einem sich ändernden Kraftstoffmassenstrom in den Brennraum eingespritzt wird.

Aus der Patentschrift DE 196 42 953 C1 ist ein Verfahren zur Bildung eines zündfähigen Kraftstoff/Luft-Gemisches in den Zylindern einer direkt einspritzenden Brennkraftmaschine bekannt, bei dem in jeden Brennraum mittels eines Einspritzventils mit variabel einstellbarem Öffnungshub Kraftstoff eingespritzt wird. Die Einstellung des Ventilhubes erfolgt dabei in Abhängigkeit vom Betriebszustand des Motors, insbesondere in Abhängigkeit von der Drehzahl, dem Ansaugmassenstrom, der Aufladung, den Emissionen und/oder der Laufruhe der Brennkraftmaschine. Es ist ferner vorgesehen, den Öffnungshub des Einspritzventils während des Einspritzvorganges zu verändern, und zwar entweder durch eine kurzzeitige Erhöhung des Öffnungshubes in einem mittleren Bereich der Einspritzzeit oder eine dynamische Verkleinerung des Öffnungshubes von einem großen Anfangswert zu Beginn der Kraftstoffeinspritzung auf einen reduzierten, jedoch von null verschiedenen Endwert am Ende der Kraftstoffeinspritzung. Die dynamische Verkleinerung des Öffnungshubes erfolgt invers exponentiell, wodurch der Großteil einer zugemessenen Kraftstoffmenge mit einem hohen Kraftstoffmassenstrom zu Beginn der Einspritzzeit in den Brennraum eingespritzt wird.

Aus der Offenlegungsschrift DE 196 02 065 A1 ist ein Verfahren zum Betrieb eines Verbrennungsmotors bekannt, bei dem während einer jeweiligen Kompressionshubphase zunächst eine Hauptkraftstoffmenge und nach einer Einspritzpause von festlegbarer Dauer eine Zündkraftstoffmenge in einen Kolbenbrennraum eingespritzt werden. Dadurch wird eine Ladungsschichtung des eingespritzten Kraftstoffes erzielt, wobei sich die beiden Gemischwolken zum Zündzeitpunkt überlappen oder aneinander angrenzen sollen.

Aus der Offenlegungsschrift DE 195 30 072 A1 ist ein Verbrennungsmotor bekannt, bei dem Kraftstoff in zwei Teilmengen in einen Brennraum eingespritzt wird, wobei die resultierende erste, größere Gemischmenge von der resultierenden zweiten, kleineren Gemischmenge zum Zeitpunkt der Zündung getrennt ist. Eine Einspritzung der ersten Kraftstoffteilmenge erfolgt während des Ansaugtaktes, während die zweite Kraftstoffteilmenge in der Expansionsphase in einen separaten Brennraumabschnitt eingespritzt und gezündet wird.

Aufgabe der Erfindung ist es, ein Verfahren zur Gemischbildung in einem Brennraum eines Verbrennungsmotors bereitzustellen, das durch spezielle Gestaltung des Einspritzvorgangs ein verbessertes Betriebsverhalten des Verbrennungsmotors erreicht.

Diese Aufgabe wird erfindungsgemäß durch ein Verfahren mit den Merkmalen des Anspruchs 1 gelöst.

Das Verfahren nach Anspruch 1 sieht eine dreistufige Kraftstoffeinspritzung vor, bei der eine Hauptkraftstoffmenge über eine Zusatzkraftstoffmenge mit einer Zündkraftstoffmenge verbunden wird. Durch die Zusatzkraftstoffmenge, die zwischen der Hauptkraftstoffeinspritzung und der Zündkraftstoffeinspritzung eingespritzt wird, können die Zeitpunkte von Beginn und Ende der Einspritzungen der Hauptkraftstoffmenge und der Zündkraftstoffmenge flexibler gewählt werden. Vorzugsweise wird als Zusatzkraftstoffmenge eine geringe Kraftstoffmenge bei einem vergleichsweise niedrigen Kraftstoffmassenstrom, d.h. bei geringer Öffnung des Einspritzventils, in den Brennraum eingespritzt. Hauptkraftstoffmenge und Zündkraftstoffmenge werden so miteinander verbunden, daß eine zuverlässige Entflammung der Hauptkraftstoffmenge erfolgt.

In Ausgestaltung der Erfindung gemäß Anspruch 2 werden die Hauptkraftstoffmenge und die Zündkraftstoffmenge bei im wesentlichen gleich großem Kraftstoffmassenstrom, d.h. gleicher Öffnungsstellung des Einspritzventils, in den Brennraum eingespritzt. Eine Einspritzventilsteuerung steuert dabei das Einspritzventil lediglich in zwei verschiedene Öffnungspositionen. Das Verfahren ist somit besonders einfach realisierbar.

Das Verfahren nach Anspruch 3 sieht während eines Arbeitstaktes eine Kraftstoffeinspritzung vor, deren Kraftstoffmassenstrom von einem von null verschiedenen, maximalen Anfangswert monoton bis auf null abgesenkt wird. Dabei wird das Einspritzventil kontinuierlich oder in Stufen langsam geschlossen und eine Variation des Luft-Kraftstoff-Verhältnisses in der Gemischwolke von fett nach mager erreicht. Damit ist sichergestellt, daß an irgendeiner Stelle der Gemischwolke zu einem bestimmten Zeitpunkt ein zündfähiges Gemisch mit günstiger Kraftstoffverteilung vorliegt.

In weiterer Ausgestaltung der Erfindung gemäß Anspruch 4 wird das Einspritzventil in vorzugsweise gleich großen Stufen oder kontinuierlich von einer Öffnungsposition in eine Schließposition übergeführt, wobei der Kraftstoffmassenstrom entsprechend bis auf null abnimmt.

Beim Verfahren gemäß Anspruch 5 wird Kraftstoff in Abhängigkeit vom Massenstrom der in den Brennraum strömenden Verbrennungsluft eingespritzt. Der Kraftstoffmassenstrom ist dabei wenigstens zeitweise dem Luftmassenstrom proportional, so daß in einem Bereich des Brennraumes ein näherungsweise gleichbleibendes Luft-Kraftstoff-Verhältnis erzielt wird. Dazu wird insbesondere der Nadelhub des Einspritzventils an die Bewegung des Lufteinlaßventils angepaßt. Vorteilhafte Ausführungsformen der Erfindung sind in den Zeichnungen dargestellt und werden nachfolgend beschrieben. Hierzu zeigen:
- Fig. 1a: in einem Zeitdiagramm den Verlauf des Sollwertes einer Ansteuerspannung bzw. den dazu proportionalen idealen Nadelhubverlauf eines Einspritzventils eines Verbrennungsmotors während eines ersten erfindungsgemäßen Verfahrensbeispiels,
- Fig. 1b: in einem Zeitdiagramm einen tatsächlichen Nadelhubverlauf während des Verfahrens gemäß Fig. 1a,
- Fig. 2a: in einem Zeitdiagramm den Verlauf des Sollwertes einer Ansteuerspannung bzw. den dazu proportionalen idealen Nadelhubverlauf eines Einspritzventils eines Verbrennungsmotors während eines zweiten erfindungsgemäßen Verfahrensbeispiels und
- Fig. 2b: in einem Zeitdiagramm einen tatsächlichen Nadelhubverlauf während des Verfahrens gemäß Fig. 2a.

Ein beispielhafter Verbrennungsmotor in Form eines Hubkolben-Ottomotors weist mehrere Arbeitszylinder mit jeweils einem Brennraum auf, dem wenigstens ein Lufteinlaßventil, wenigstens ein Abgasauslaßventil, ein Kraftstoffeinspritzventil für eine Direkteinspritzung von Kraftstoff in den Brennraum sowie eine Zündkerze zur Zündung des eingespritzten Kraftstoffs zugeordnet sind. Während des Ansaug- und/oder Kompressionshubes des Hubkolbens wird zur Bildung eines Luft-Kraftstoff-Gemisches durch das Einspritzventil fein zerstäubter Kraftstoff in die angesaugte Verbrennungsluft gespritzt (sog. innere Gemischbildung). Insbesondere bei sogenannten strahlgeführten Brennverfahren ist es erforderlich, daß im Bereich der Zündkerze zum Zeitpunkt der Zündung ein zündfähiges Luft-Kraftstoff-Gemisch vorliegt, was im Falle der Einspritzung in den Kompressionshub durch eine entsprechende Anordnung der Zündkerze im Bereich des Einspritzstrahls des Einspritzventils sichergestellt wird.

Wesentliche Kriterien für eine optimale Verbrennung des eingespritzten Kraftstoffs sind die Entflammungsstabilität und die vollständige Verbrennung des eingespritzten Kraftstoffs, so daß Verkokungen innerhalb des Brennraums, Zyklenschwankungen und erhöhte Schadstoffemissionen vermieden werden. Dazu sind die nachfolgend beschriebenen Verfahrensbeispiele zur Gemischbildung in einem Brennraum geeignet, die beispielsweise abwechselnd während des Betriebes des Verbrennungsmotors in Abhängigkeit von dessen Lastzustand angewendet werden können.

Gemäß einem ersten erfindungsgemäßen Verfahrensbeispiel wird die während eines Arbeitstaktes in den Brennraum eines Zylinders einzuspritzende Kraftstoffmenge in drei Teilmengen, eine Hauptkraftstoffmenge, eine Zündkraftstoffmenge und eine Zusatzkraftstoffmenge aufgeteilt. Die Hauptkraftstoffmenge wird in einem ersten Einspritzschritt zur Bildung einer ersten Gemischwolke in den Brennraum eingespritzt, wobei dieser Einspritzschritt vorzugsweise zu Beginn der Kompressionsphase des in dem Arbeitszylinder geführten Hubkolbens erfolgt. Der Beginn des genannten Einspritzschrittes kann in einem modifizierten Verfahren bereits während der Ansaugphase vorgesehen sein.

In einem zweiten Einspritzschritt, der direkt, d.h. ohne Einspritzunterbrechung, an den ersten anschließt, wird die Zusatzkraftstoffmenge mit einem Kraftstoffmassenstrom, der geringer ist als der in dem ersten Einspritzschritt vorgesehene Kraftstoffmassenstrom, in den Brennraum eingespritzt.

Schließlich wird in einem dritten Einspritzschritt, der wiederum direkt an den zweiten anschließt, die Zündkraftstoffmenge bei einem Kraftstoffmassenstrom, der größer ist als der in dem zweiten Einspritzschritt vorgesehene Kraftstoffmassenstrom, in den Brennraum eingespritzt. Die Zündkraftstoffmenge bildet eine zweite Gemischwolke, die zur Auslösung des Brennvorganges von der Zündkerze entzündet wird und dazu ein annähernd stöchiometrisches Luft/Kraftstoff-Gemisch aufweist.

Die Zusatzkraftstoffmenge, deren Größe von dem zeitlichen und räumlichen Abstand der ersten Gemischwolke von der zweiten Gemischwolke abhängt, verbindet diese beiden Gemischwolken miteinander, so daß diese unabhängig voneinander in den Brennraum eingespritzt werden können. Die Zusatzkraftstoffmenge gewährleistet eine sichere Übertragung der Entflammung von der Zündkraftstoffmenge auf die Hauptkraftstoffmenge und wird im übrigen möglichst gering gewählt.

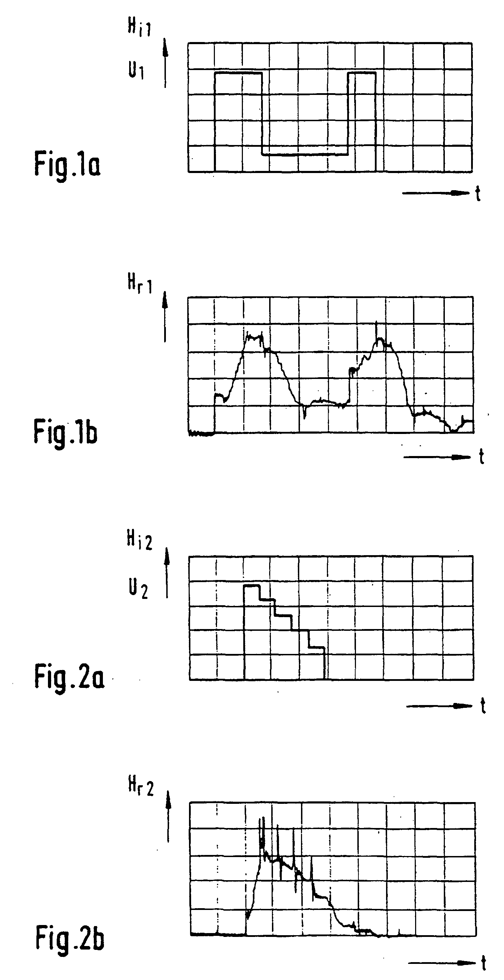

Durch die vorgeschlagene dreistufige Kraftstoffeinspritzung ergibt sich ein vergrößerter Gestaltungsbereich der Optimierung der Gemischbildung und der Verbrennungslage. In Fig. 1a ist exemplarisch der Verlauf einer Ansteuerspannung U₁ eines elektromagnetisch betätigten Einspritzventils des Verbrennungsmotors über der Zeit t während der Durchführung des erläuterten ersten Verfahrens dargestellt, wobei diese Spannung U₁ proportional zum idealen Nadelhub Hᵢ₁ des Einspritzventils ist. In Fig. 1b ist der tatsächliche Verlauf des Nadelhubs Hᵣ₁ während des zugehörigen Einspritzvorgangs dargestellt.

In einem zweiten erfindungsgemäßen Verfahrensbeispiel zur Gemischbildung in einem Brennraum des Verbrennungsmotors wird während eines Arbeitstaktes des Verbrennungsmotors über das Einspritzventil Kraftstoff mit einem monoton abfallenden Kraftstoffmassenstrom in den Brennraum eingespritzt. Vorzugsweise wird der Kraftstoff nach Beginn der Kompressionsphase eingespritzt, wobei der Kraftstoffmassenstrom von einem maximalen Anfangswert bis auf null abfallend reduziert wird. Der abfallende Kraftstoffmassenstrom wird durch ein langsames Schließen des Einspritzventils erreicht. Dazu ist in Fig 2a exemplarisch die Ansteuerspannung U₂ eines elektromagnetisch betätigten Einspritzventils des Verbrennungsmotors über der Zeit t dargestellt, wobei diese Spannung U₂ in etwa proportional zum idealen Verlauf Hᵢ₂ des Nadelhubs des Einspritzventils ist. In Fig. 2b ist der tatsächliche Verlauf Hᵣ₂ des Nadelhubs des Einspritzventils über der Zeit t während des zugehörigen Einspritzvorgangs dargestellt. Aus den Fig. 2a und 2b wird ersichtlich, daß aufgrund der Trägheit des Einspritzventils und seiner Ansteuerung über eine treppenförmige Reduzierung der Ansteuerspannung U₂ ein näherungsweise kontinuierliches Schließen des Einspritzventils erreichbar ist. Durch das langsame Schließen des Einspritzventils ergibt sich in der erzeugten Gemischwolke ein Luft-Kraftstoff-Verhältnis, das kontinuierlich von fett nach mager variiert wird. Dadurch kann insbesondere bei hohen Lastanforderungen sichergestellt werden, daß zum gewünschten Zündzeitpunkt an einer Stelle der Gemischwolke ein zündfähiges Luft-Kraftstoff-Gemisch vorliegt.

Bei einem dritten erfindungsgemäßen Verfahrensbeispiel zur Gemischbildung in einem Brennraum des Verbrennungsmotors wird über eine Meßvorrichtung der während der Ansaugphase in den Brennraum eintretende Luftmassenstrom detektiert und ein dazu wenigstens zeitweise proportionaler Kraftstoffmassenstrom durch das Einspritzventil in den Brennraum eingespritzt. Das Proportionalitätsverhältnis zwischen Luftmassenstrom und Kraftstoffmassenstrom kann dabei in Abhängigkeit von der Motorlast gewählt werden. In einem modifizierten Ausführungsbeispiel dieses Verfahrens wird der Nadelhub proportional zu dem Luftmassenstrom gewählt, wobei sich ein von der Öffnungscharakteristik des Einspritzventils abhängiger Kraftstoffmassenstrom ergibt.

Das beschriebene dritte Verfahrensbeispiel ermöglicht eine Bildung eines homogenen Luft-Kraftstoff-Gemisches, das insbesondere im Motorbetrieb ohne Schichtladung, z.B. im Vollastbetrieb, wünschenswert ist. Das dritte erfindungsgemäße Verfahrensbeispiel kann einem der beiden anderen Verfahrensbeispiele vorangestellt oder mit diesen kombiniert werden. Alle dargestellten Verfahrensbeispiele ermöglichen eine Wirkungsgradoptimierung des Verbrennungsmotors mit innerer Gemischbildung, eine verbesserte Entflammungsstabilität, reduzierte Zyklusschwankungen und Schadstoffemissionen sowie eine hohe Langzeitstabilität durch reduzierte Verkokung im Brennraum.

## Patentansprüche

1. Verfahren zur Gemischbildung in einem Brennraum eines Verbrennungsmotors, bei dem
- während eines Arbeitstaktes des Verbrennungsmotors Kraftstoff mit einem sich änderndem Kraftstoffmassenstrom in den Brennraum eingespritzt wird,
**dadurch gekennzeichnet, daß**
- wenigstens in bestimmten Motorbetriebszuständen eine dreistufige Kraftstoffeinspritzung während der Kompressionsphase derart erfolgt, daß
- in einem ersten Einspritzschritt eine vom Lastzustand des Verbrennungsmotors abhängige Hauptkraftstoffmenge zur Bildung einer ersten Gemischwolke,
- in einem direkt an den ersten anschließenden zweiten Einspritzschritt eine Zusatzkraftstoffmenge mit einem Kraftstoffmassenstrom, der geringer ist als der in dem ersten Einspritzschritt vorgesehene Kraftstoffmassenstrom und
- in einem direkt an den zweiten anschließenden dritten Einspritzschritt eine Zündkraftstoffmenge mit einem Kraftstoffmassenstrom, der größer ist als der in dem zweiten Einspritzschritt vorgesehene Kraftstoffmassenstrom, zur Bildung einer zweiten Gemischwolke eingespritzt werden,
- wobei die Einspritzung der Zusatzkraftstoffmenge so gewählt ist, daß über diese die zweite Gemischwolke mit der ersten Gemischwolke verbunden wird.

2. Verfahren nach Anspruch 1,
**dadurch gekennzeichnet, daß**
die Kraftstoffmassenströme in dem ersten und dem dritten Einspritzschritt im wesentlichen gleich groß sind.

3. Verfahren nach Anspruch 1 oder 2,
**dadurch gekennzeichnet, dass**
mindestens in bestimmten Motorbetriebszuständen während der Kompressionsphase Kraftstoff mit einem Kraftstoffmassenstrom eingespritzt wird, der von einem maximalen Anfangswert monoton bis auf null abfallend reduziert wird.

4. Verfahren nach Anspruch 3,
**dadurch gekennzeichnet, dass**
der Kraftstoffmassenstrom in wenigstens drei Stufen oder kontinuierlich vom maximalen Anfangswert bis auf null reduziert wird.

5. Verfahren nach einem der Ansprüche 1 bis 4,
**dadurch gekennzeichnet, dass**
mindestens in bestimmten Motorbetriebszuständen während der Ansaugphase eine Kraftstoffmenge mit einem wenigstens zeitweise dem Luftmassenstrom proportionalen Kraftstoffmassenstrom eingespritzt wird.

## Claims

1. A process for forming a mixture in a combustion chamber of an internal combustion engine in which
- fuel with a varying fuel mass flow rate is injected into the combustion chamber during a work cycle of the internal combustion engine,
**characterised in that**
- three-step fuel injection takes place during the compression phase under certain engine operating conditions at least in such a manner that
- a principal fuel quantity dependent upon the load condition of the internal combustion engine is injected to form a first mixture cloud in a first injection step,
- an additional fuel quantity with a fuel mass flow rate which is less than the fuel mass flow rate provided in the first injection step is injected in a second injection step directly following the first injection step, and
- an ignition fuel quantity with a fuel mass flow rate greater than that provided in the second injection step is injected to form a second mixture cloud in a third injection step directly following the second injection step,
- the injection of the additional fuel quantity is selected such that it connects the second mixture cloud to the first mixture cloud.

2. A process in accordance with claim 1,
**characterised in that**
the fuel mass flow rates in the first and the third injection steps are of essentially equal magnitude.

3. A process in accordance with claim 1 or 2,
**characterised in that**
fuel is injected at a fuel mass flow rate which is reduced monotonously from a maximum starting value to zero during the compression phase under certain engine operating conditions at least.

4. A process in accordance with claim 3,
**characterised in that**
the fuel mass flow rate is reduced from the maximum starting value to zero in at least three stages or continuously.

5. A process in accordance with one of claims 1 to 4,
**characterised in that**
a fuel quantity with a fuel mass flow rate at least temporarily proportional to the air mass flow rate is injected during the induction phase under certain engine operating conditions at least.

## Revendications

1. Procédé pour la formation du mélange dans une chambre de combustion d'un moteur à combustion interne, selon lequel:
- pendant le cycle de travail du moteur à combustion interne, du carburant est injecté avec un débit massique de carburant variable dans la chambre de combustion,
**caractérisé en ce que**
- au moins dans certains états de fonctionnement du moteur, une injection de carburant en trois étapes est exécutée pendant la phase de compression de telle sorte que
- dans une première étape d'injection, une quantité principale de carburant, qui dépend de l'état de charge du moteur à combustion interne, est injectée pour former un premier nuae de mélange,
- dans une seconde étape d'injection qui succède directement à la première, une quantité supplémentaire de carburant ayant un débit massique de carburant inférieur au débit massique de carburant prévu dans la première étape d'injection, est injectée, et
- dans une troisième étape d'injection se raccordant directement à la seconde, une quantité de carburant d'allumage ayant un débit massique de carburant qui est supérieur au débit massique de carburant prévu dans la seconde étape d'injection, est injectée pour former un second nuage de mélange,
- l'injection de la quantité supplémentaire de carburant étant choisie de telle sorte qu'au moyen de cette quantité de carburant, le second nuage de mélange est relié au premier volume de mélange.

2. Procédé selon la revendication 1, **caractérisé en ce que** les débits massiques de carburant dans les première et troisième étapes d'injection sont essentiellement identiques.

3. Procédé selon la revendication 1 ou 2, **caractérisé en ce qu'**au moins dans certains états de fonctionnement du moteur, pendant la phase de compression, du carburant est injecté par un débit massique de carburant qui est réduit d'une manière monotone à partir d'une valeur maximale initiale, pour tomber jusqu'à zéro.

4. Procédé selon la revendication 3, **caractérisé en ce que** le débit massique de carburant est réduit en trois étapes ou continûment depuis la valeur initiale maximale jusqu'à zéro.

5. Procédé selon l'une des revendications 1 à 4, **caractérisé en ce qu'**au moins dans certains états de fonctionnement du moteur, pendant la phase d'aspiration, une quantité de carburant et injectée avec un débit massique de carburant qui, au moins par instants, est proportionnel au débit massique d'air.
